Europäisches Patentamt

European Patent Office

Office européen des brevets

(11) Veröffentlichungsnummer : **0 485 335 A1**

(12) **EUROPÄISCHE PATENTANMELDUNG**

(21) Anmeldenummer : **91810834.1**

(22) Anmeldetag : **28.10.91**

(51) Int. Cl.⁵ : **G05D 7/01**, F16K 21/02

(30) Priorität : **05.11.90 CH 3509/90**

(43) Veröffentlichungstag der Anmeldung : **13.05.92 Patentblatt 92/20**

(84) Benannte Vertragsstaaten :
**DE FR GB**

(71) Anmelder : **ROTHENBERGER, Jakob, Dr.nat.oec.**
**Weinmanngasse 112**
**CH-8700 Küsnacht (CH)**

(72) Erfinder : **ROTHENBERGER, Jakob, Dr.nat.oec.**
**Weinmanngasse 112**
**CH-8700 Küsnacht (CH)**

(54) **Mit Federdruckrückstellkraft wirkdruckgesteuerter Durchflussregler von Fluiden.**

(57) Der Durchflussregler besteht aus einem Gehäuse [1], einem damit verschraubten Ablaufstopfen [2] mit zuflussseitigem Ventilsitz [3], der mit einer durch Wirkdruckschwankungen axial sich verschiebenden, auf einer Druckfeder [4] sitzenden, kreisförmigen Drosselscheibe [5] zusammenwirkt. Unterschiedliche, mehrstufige Drosselungen des auf mehrere Ströme verteilten Zuflusses durch Blenden [7,8,9,10,11] in der Drosselscheibe [5] und den Ringspalt [6], die Misch- und Drosselräume [17, 20] sowie Blenden [12,13] im Federsitzboden [22] einerseits und wirkdruckregelbare Durchflussquerschnitte zwischen den Druckfederwindungen [18] und zwischen Drosselscheibenschliessfläche [15] und Ventilsitz [3] andrerseits, ergeben, bei entsprechender Kombination der mehrstufigen Drosselungen, vorbestimmte, konstante, fallende oder steigende Durchfluss-Kennlinien innerhalb eines vorbestimmten Wirkdruckbereiches.

Fig.1

EP 0 485 335 A1

Die bekannten, mit Federrückstellkraft wirkdruckgesteuerten Durchflussregler beschränken sich auf Durchflusskonstanthalter, deren Durchflüsse je nach Wirkdruckbereich, Wirkdruckhöhe und Stromgrösse jedoch meistens zu hohe Toleranzen und Hysteresen aufweisen.

Aufgabe der Erfindung ist, einen Strömungsregler zu schaffen, dessen vorgenannten Nachteile, auch in Verbindung mit einer viel zu aufwendigen Konstruktionsweise behoben werden und neben Konstantströmen beliebig andere Durchfluss-Kennlinien und Durchfluss-Charakteristiken machbar sind. Dies wird erfindungsgemäss durch die Merkmale des Patent-Anspruches 1 gelöst.

Die Konstruktion des Durchflussreglers ist sehr einfach und mit relativ geringem Aufwand herstellbar. Aus Fig. 7 ist ersichtlich, welche Vielfalt von Durchflusskennlinien mit dem erfindungsgemässen Durchflussregler möglich sind. Der Wirkdruckbereich beschränkt sich nicht nur auf den in Fig. 7 festgelegten Bereich, sondern fängt schon mit einem Wirkdruck von 0,2 bar an und übersteigt die 20 bar. Die Grösse des Durchflusses beginnt mit 0,2 Liter/Minute und geht über die Grösse von 200 m3/h hinaus. In vielen Fällen kann es vorteilhafter sein, den geregelten Abflussstrom aus Strömen durch feste Blenden und solchen durch geregelte Durchflussquerschnitte zu kombinieren. Beispiele dafür sind aus Fig. 7 ersichtlich, wo die Teilströme h und i einen Konstantstrom a innerhalb eines Wirkdruckbereiches von 1 bis 4 bar und die Teilströme k und l einen Konstantstrom a innerhalb eines Wirkdruckbereiches von 1 bis 6 bar ergeben.

Es zeigen im Längsschnitt:

Fig. 1 einen Durchflussregler mit Zu- und Abfluss-NW G 1/4″ und allen konstruktiven Einzelheiten.

Fig. 2 eine Drosselscheibe mit Vordrossel 25

Fig. 3 stumpfkegelförmiger Ventilsitzaufbau 24

Fig. 4 stumpfkegelförmige Ventilsitz-Schliessfläche 26

Fig. 5 Drosselscheibe mit Zinnen a stromabwärts

Fig. 6 Drosselscheibe mit Zinnen a stromaufwärts

Fig. 7 zeigt eine grafische Darstellung von gemessenen Durchfluss-Charakteristiken in Abhängigkeit verschiedener Ausführungsformen.

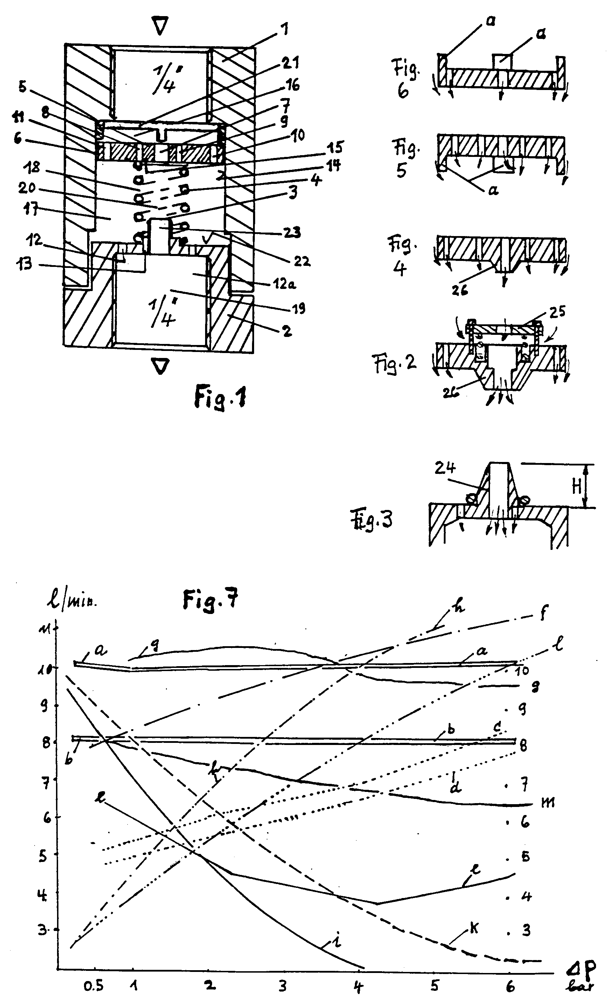

Die Arbeitsweise des Durchflussreglers lt. Fig. 1: Zu- und Abfluss NW G 1/4″ sind durch Pfeile gekennzeichnet. Nach Durchfluss des Anschlussgewindeteils des rohrförmigen Gehäuses 1 in einen, im Durchmesser erweiterten, Zuflussraum 16, wo der Strom in einer ersten Phase, je nach der Durchflussfläche aller Blenden 7,8,9,1o,11 und des Ringspaltes 6, gedrosselt wird und die Drosselscheibe 5 unter dem Wirkdruck und der Feder-Gegenkraft in Richtung des Ventilsitzes 3 verschoben wird. Die durch die Blenden und den Ringspalt unerschiedlich gedrosselten Einzelströme gelangen nun in den Misch- und Drosselraum 17 und 20, wo eine weitere starke Vermischung und Drosselung der Ströme gegenseitig und durch die Schikanen 3,4, 5,12,13,14,18,22,23,24 stattfindet, um dann endgedrosselt in den Abflussraum 19 des Ablaufstopfens 2 zu fliessen. Die gewünschte Stromkennlinie ergibt sich durch Kombination der vorbestimmten Blenden inbezug auf deren Lage und Querschnitt mit den regelbaren Durchflussquerschnitten. Der vierbeinige Drahtklemmring 21 verhindert ein Zurückschlagen der Drosselscheibe 5 und ermöglicht, Federweg und Federvorspannung einzustellen.

Je näher die Drosselscheibe 5 bei steigendem Wirkdruck zum Ventilsitz 3 kommt, desto weniger wird der Strom aus der Blende 7 gedrosselt, aber desto höhere Widerstände ergeben sich für die Ströme aus den übrigen Blenden, die ja auch zum Teil wenigstens zum Ventilsitz 3 drängen. Liegt die Drosselscheibe 5 mit ihrer Ventilsitzschliessfläche 15 auf dem Ventilsitz 3, dann gelangt nur noch der Strom aus der zentralen Blende 7 durch den Ventilsitz 3 in den Abflussraum 19. Die Ströme aus den Blenden 8 und 9, die ja innerhalb des Federraumes liegen, müssen sich nun ihren Durchgang durch die wesentlich verengten Federwindungen 18 in den Mischraum 17 und von hier durch die Blenden 12,12a und 13 in den Abflussraum 19 suchen.

Die Drosselscheibe 5 liegt lose und eben auf der Druckfeder 4, deren Enden geschliffen sind. Die Feder sitzt fest auf dem Ventilsitzboden 22. Die Blocklänge der Feder muss kleiner sein als die Höhe H Fig.3. Daselbe gilt für die Feder der Vordrosselung lt. Fig.2, deren c-Wert wesentlich kleiner sein muss. Der konische Schliesskegel 26 der Drosselscheiben lt. Fig. 2 und 4 kann derart ausgebildet sein, dass entweder die Kegelfläche oder die daran anschliessende Stirnfläche der Drosselscheibe mit dem Ventilsitz dicht schliesst. Diese beiden Varianten ergeben naturgemäss gänzlich verschiedene Durchfluss-Kennlinien. Gleiches gilt bei Aenderung des Kegelwinkels und der Kegelhöhe. Die kegelstumpfförmigen Ventilsitzaufbauten 24 Fig. 3 ergeben gegenüber den zylindrischen Ventilsitzaufbauten 23 bei gleicher Höhe H Fig. 3 etwa 10-15 %. höhere, fast parallel verlaufende Durchflusskennlinien.

Je grösser die Höhe H 23 und 24 Fig. 3, desto niedriger verläuft die Durchflusskennlinie.

Bei den Fig. 5 und 6 handelt es sich um eine Drosselscheibe wie 5 in Fig. 1, jedoch mit vier, die Mantelfläche vergrösserten Zinnen a, welche eine mögliche Verkantung der Drosselscheibe ausschliessen und den Durchfluss durch den Ringspalt 6 im Verhältnis zur Drosselscheibe 5 Fig. I stark verändern. Zusätzliche Aenderungen der Durchflusskennlinie ergeben sich auch daraus, ob die Drosselscheibe mit den Zinnen a stromaufwärts oder stromabwärts eingelegt wird, was aus nachfolgender Zusammenstellung ersichtlich wird.

| Wirkdruck bar | 1,5 | 2 | 3 | 4 | 5 | 6 |
|---|---|---|---|---|---|---|
| Zinnen a strom- aufwärts  l/min. | 9 | 9,2 | 9,8 | 9,4 | 8,6 | 9,0 |
| stromabwärts  " | 9,6 | 9,6 | 9,6 | 9,6 | 9,6 | 9,6 |

Die beiden Durchflusskennlinien zeigen, dass in diesem Fall einzig durch Wenden der Drosselscheibe der Kennlinien-Verlauf von 9 l/min. bei 1,5 bar auf 9,8 l/min. bei 3 bar steigend und wiederabfallend bis etwa 9 l/min. bis 6 bar, in einen Kennlinienverlauf mit sehr genauem konstantem Durchfluss von 1,5 bar bis 6 bar Wirkdruck bei 9,6 l/min. verwandelt werden kann.

Nachfolgend werden einige Ausführungsbeispiele anhand der besonderen, für eine vorbestimmte Durchflusskennlinie erforderlichen Parameter und technischen Daten gegeben.

Beispiel 1

Gesetzte Bedingungen:
Konstanter Durchfluss 10 Liter/Minute, Wirkdruckbereich 1 - 7 bar, Anschluss G 1/4″ IG.
Ausführung:
Druckfeder 4 Da 12 mm, d 0,8 mm, ig $4\frac{1}{2}$, Lo 11 mm
Ventilsitzaufbau 24 Fig. 3, Ventilsitz-$\varnothing$ 5,1 mm, H 4 mm
Drosselscheibe 5 $\varnothing$ 16,60 mm, d 1 mm, zentr.Blende 7 $\varnothing$ 2,9 mm, Blende 9 $\varnothing$ 1,9 mm. Der Ringspalt 6 ist so knapp bemessen, dass keinerlei Exzentrizität der Drosselscheibe auftreten kann.
Die Durchflussprüfung dieses 10 Liter Konstantdurchflussreglers ergab folgendes Resultat:

| Wirkdruck in bar | 1 | 2 | 3 | 4 | 5 | 6 |
|---|---|---|---|---|---|---|
| l/min. von 1-6 bar | 9,8 | 10,1 | 10,2 | 10,0 | 10,1 | 10,2 |
| l/min. von 6-1 bar | 9,7 | 10,0 | 10,1 | 10,0 | 10,1 | 10,1 |

Mit Vordrosselscheibe 25 Fig.2

| | | | Wirkdruck in bar | 0,3 | 0,5 | 0,8 | 1,0 |
|---|---|---|---|---|---|---|---|
| | | | l/min. | 10,3 | 10,2 | 10,1 | 1,0 |

Beispiel 2

Gesetzte Bedingungen:
Konstanter Durchfluss 9 Liter/Minute, Wirkdruckbereich 1 - 6 bar, Anschluss G 1/4″ IG.
Ausführung:
Druckfeder 4 Da 12 mm, d 0,8 mm, ig $3\frac{1}{2}$, Lo 9.
Ventilsitzaufbau 24 Fig.3, Ventilsitz-$\varnothing$ 5,1 mm, H 3,5 mm, Blende 12 = 1,5 mm $\varnothing$
Drosselscheibe 5 $\varnothing$= 16,62 mm, d l,0 mm, Blende 7 $\varnothing$=2,4 mm, 2 Blenden 11, $\varnothing$ je 2,0 mm.

Durchflussprüfung:

| Wirkdruck in bar | 1 | 2 | 3 | 4 | 5 | 6 |
|---|---|---|---|---|---|---|
| Liter/Minute | 9 | 9,2 | 9,1 | 8,9 | 9 | 9,2 |

Beispiel 3

Gesetzte Bedingungen:
Konstanter Durchfluss 8 Liter/Minute, Wirkdruckbereich 1 - 6 bar, Anschlüsse G 1/4″ IG.
Ausführung: Druckfeder 4 wie vordem
Ventilsitzaufbau 23, Fig.1, Ventilsitz-$\varnothing$ 5,1 mm
H Fig. 3 = 3,5 mm, Blende 13= $\varnothing$ 1,3 mm.
Drosselscheibe 5: 1 Blende 11 mit $\varnothing$ 2,0 mm, sonst wie vordem.

3

```
Durchflussprüfung:

Wirkdruck in bar          1     2     3     4     5     6

Liter/Minute            7,9   8,1    8     8     8    7,9
```

Die vorgenannten drei Beispiele für die Durchfluss-Konstanthaltung zeigen, mit welcher aussergewöhnlichen Genauigkeit und relativ äusserst primitiven Mitteln dieser Durchflussregler zu arbeiten in der Lage ist.

Beispiel 4

Gesetzte Bedingungen:
Vier Luftbefeuchter sollen pro Minute je 5 Liter Wasser aus einem offenen Wasserbehälter des Umwälzsystems durch eine Saugpumpe erhalten. Pumpenleistung 60 l/min. bei 2,5 m WS und 30 l/min. bei 4 m WS. Der Konstantfluss von 5 Liter muss im Wirkdruckbereich von 0,2 bis 0,8 bar beibehalten werden.
Tech. Details des Reglers:
Druckfeder 4 Da 13 mm, d 0,75 mm, ig $3\frac{1}{2}$, Lo 8,5 mm.
Ventilsitzaufbau 23, Ventilsitz-$\varnothing$ 5,1 mm, H 3,2 mm.
Drosselscheibe 5 $\varnothing$=16,6o, d 3 mm, 6 Blenden 11 mit je 1,6 mm $\varnothing$.
Die nachfolgenden zwei Beispiele a] und b] zeigen Durchflussregler mit langsam seigendem Durchfluss in einem Wirkdruckbereich von 1 - 7 bar.

```
Wirkdruck in bar       1      2      3      4      5      6      7

Liter/Minute    a]    8,6    9,4   10,o   1o,5    11    11,3   11,8

Liter/Minute    b]    8,4    9,2    9,8   1o,3   1o,8    11    11,5
```

Durch Veränderung der Höhe H des Ventilsitzaufbaues 24 [Fig. 3] und des Vierbein-Klemmringes 21 [Fig.1] lassen sich Federweg und Federvorspannung einstellen.
Es hat sich gezeigt, dass es vorteilhafter ist, die Höhe der Drosselscheiben-Mantelfläche und damit auch den Ringspalt 6 über den ganzen Umfang auf 2,5 bis 3mm zu erhöhen und eine enge Fertigungstoleranz zum Gehäusemantel 14 vorzusehen, um einen symmetrischen Ringspalt über den ganzen Wirkdruckbereich hinweg zu gewährleisten. Diese Empfehlungen richten sich vorallem für die in Fig. 1 dargestellte Grösse G 1/4″.
Die Veränderung der Höhe H des Ventilsitzaufbaues 23 von H 3,2 auf H 3,8 mm ergeben nachstehende Durchflussänderungen.

```
Wirkdruck in bar            1      2      4      6

Höhe H 3,2 mm   l/min.     7,3    5,8    4,1    4,9
  "    H 3,8 mm   "   "     7      4,8    3,8    4,6
```

Bei meinen Versuchen über einen längeren Zeitraum hinweg hat sich gezeigt, dass es mit der erfindungsgemässen Ausführung des Durchflussreglers praktisch kein Problem ist, die verschiedensten Durchflusskennlinien und Durchfluss-Charakteristiken zu erstellen.

**Patentansprüche**

1] Durchflussregler, bestehend aus einem rohrförmigen Gehäuse, einem damit verschraubten Ablaufstopfen mit zuflussseitigem Ventilsitz, der mit einer durch Wirkdruckschwankungen axial sich verschiebenden, auf einer Druckfeder liegenden und den Ventilsitz überdeckenden, kreisrunden Drosselscheibe zusammenwirkt, dadurch gekennzeichnet, dass Blenden [8,9,10,11] in der Drosselscheibe [5] sowie ein im Querschnitt vorbestimmter Ringspalt [6] zwischen dieser und dem Gehäusemantel [14] den im Zuflussraum [16] sich stauenden Strom in mehrere, unterschiedlich gedrosselte Ströme aufteilen, welche nach Vermischung im Druckfederraum [17,20] durch wirkdruckgeregelte Durchflussquerschnitte zwischen Druckfederwindungen [18] einerseits und zwischen scharfkantigem Ventilsitz [3] und Drosselscheibenschliessfläche [15] andrerseits nach mehrmaligen, drosselnden Umlenkungen in den Abflussraum [19] fliessen.

**2]** Durchflussregler nach Anspruch 1, dadurch gekennzeichnet, dass der Ventilsitz [3] mit einem zylinder- oder kreiskegelstumpfförmigen Aufbau [23,24] aus dem Druckfedersitzboden [22] in den axialen Druckfederraum [20] ragt und von der Druckfeder [4] umschlossen ist.

**3]** Durchflussregler nach Anspruch 1, dadurch gekennzeichnet, dass Lage und Grösse der Blenden in der Drosselscheibe [5] durch die gewünschte Durchfluss-Charakteristik bestimmt sind.

**4]** Durchflussregler nach Anspruch 3, dadurch gekennzeichnet, dass in der Drosselscheibe [5] eine Blende [7] zentrisch zum Ventilsitz [3] und weitere Blenden innerhalb [20] und ausserhalb [17] des Druckfederraumes sowie im Druckfedersitzboden [22, 12, 12a] angeordnet sind.

**5]** Durchflussregler nach Anspruch 1, gekennzeichnet durch eine der Drosselscheibe [5] stromaufwärts vorgelagerte Vordrosselscheibe [25, Fig.2] mit wirkdruckgeregeltem Durchflussquerschnitt.

**6]** Durchflussregler nach Anspruch 6, dadurch gekennzeichnet, dass die Vordrosselscheibe [25, Fig.2] an der Drosselscheibe [5] gefedert gelagert ist.

Fig.1

Fig. 6

Fig. 5

Fig. 4

Fig. 2

Fig. 3

Fig. 7

**Europäisches Patentamt**

# EUROPÄISCHER RECHERCHENBERICHT

Nummer der Anmeldung

EP    91 81 0834

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | FR-A-1 236 014 (MICHOULIER)<br>* Seite 2, linke Spalte, Zeile 30 - Zeile 33 *<br>* Seite 2, rechte Spalte, Zeile 11 - Zeile 13 *<br>* Seite 2, rechte Spalte, Zeile 22 - Zeile 32 *<br>--- | 1-5 | G05D7/01<br>F16K21/02 |
| Y | US-A-2 678 066 (CARTER)<br>* Spalte 2, Zeile 32; Abbildungen 1,3 *<br>--- | 1-5 | |
| Y | FR-A-2 223 613 (LABAVIA)<br>* Abbildung 2 *<br>--- | 1-4 | |
| Y | DE-A-1 473 034 (BENKISSER)<br>* Seite 3, Zeile 20; Abbildung 6 *<br>--- | 1 | |
| Y | US-A-2 840 107 (CAMPBELL)<br>* Abbildung 1 *<br>--- | 2 | |
| Y | FR-A-1 073 732 (NORMALAIR)<br>* Abbildung 2 *<br>--- | 2 | |
| P,Y | US-A-5 004 008 (DRUCKER)<br>* Abbildung 7 *<br><br>----- | 5 | **RECHERCHIERTE SACHGEBIETE (Int. Cl.5 )**<br><br>G05D<br>F16K |

Der vorliegende Recherchenbericht wurde für alle Patentansprüche erstellt

| Recherchenort | Abschlußdatum der Recherche | Prüfer |
|---|---|---|
| DEN HAAG | 17 JANUAR 1992 | LOKERE H.P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument

EPO FORM 1503 03.82 (P0403)